# EUROPÄISCHE PATENTSCHRIFT

(11) **EP 4 326 602 B1**
(45) Veröffentlichungstag und Bekanntmachung des Hinweises auf die Patenterteilung: **09.04.2025**
(21) Anmeldenummer: 22707121.4
(22) Anmeldetag: 22.02.2022
(51) Int. Cl.: B62D 25/06, B62D 27/02

(54) **BEFESTIGUNGSANORDNUNG MIT EINER FAHRZEUG-DACHRAHMENSTRUKTUR UND EINEM DACHMODUL**
FASTENING ARRANGEMENT WITH A VEHICLE ROOF-FRAME STRUCTURE AND A ROOF MODULE
SYSTÈME DE FIXATION DOTÉ D'UNE STRUCTURE DE CADRE DE TOIT DE VÉHICULE ET MODULE DE TOIT

(30) Priorität: 19.04.2021 DE 102021109725
(43) Veröffentlichungstag der Anmeldung: 28.02.2024
(73) Patentinhaber: AUDI AG, 85057 Ingolstadt (DE)
(72) Erfinder: BRYMERSKI, Wojciech, 70806 Kornwestheim (DE)
(86) Internationale Anmeldenummer: PCT/EP2022/054326
(87) Internationale Veröffentlichungsnummer: WO 2022/223176

(56) Entgegenhaltungen:
- WO-A1-2021/008728
- CN-U- 209 142 235
- DE-B4- 10 249 418
- DE-C1- 4 313 555

## Beschreibung

Die Erfindung betrifft eine Befestigungsanordnung mit einer Dachrahmenstruktur eines Fahrzeugs und einem Dachmodul nach dem Oberbegriff des Anspruches 1.

Die Fahrzeugkarosserie eines zweispurigen Fahrzeugs weist eine Dach-Tragstruktur auf, an der ein Dachmodul montierbar ist. Dieses kann als eine separate Vormontageeinheit vorgehalten werden. Je nach herzustellender Fahrzeug-Variante kann das Dachmodul ein, die Karosserie-Dachseite komplett geschlossenflächig überspannendes Volldach-Blechteil zur Bildung einer Volldach-Fahrzeugvariante sein. Alternativ kann das Dachmodul ein Schiebedach-Dachmodul zur Bildung einer Schiebedach-Fahrzeugvariante oder ein Panoramadach-Dachmodul zur Bildung einer Panoramadach-Fahrzeugvariante sein.

Eine gattungsgemäße Befestigungsanordnung weist eine Dachrahmenstruktur und ein Dachmodul auf. Dessen Dachmodul-Träger ist im Zusammenbauzustand auf einem Klebeflansch der Dachrahmenstruktur unter Zwischenlage eines Klebstoffes abgestützt und damit in Klebverbindung. Zusätzlich ist der Dachmodul-Träger mit dem Klebeflansch der Dachrahmenstruktur in einer Schraubverbindung, bei der der Dachmodul-Träger mittels Befestigungsschrauben am Klebeflansch der Dachrahmenstruktur festgespannt ist.

Im Stand der Technik sind die Befestigungsschrauben als Metallschrauben realisiert. Um eine Kontaktkorrosion in Verbindung mit dem Metall-Fahrzeug-rohbau zu vermeiden, weisen die Metallschrauben einen geeigneten, fertigungstechnisch aufwendigen Oberflächenschutz auf, zum Beispiel einen Zinklamellen-Überzug, oder bestehen diese aus Edelstahl. Zudem ist der Einsatz solcher Metallschrauben mit einem hohen Bauteil-Gewicht verbunden.

Aus der EP 3 388 269 A1 ist ein Zwischenelement für ein Fahrzeugdach und eine Befestigungsanordnung für ein Fahrzeugdach bekannt. Aus der DE 102 54 573 A1 ist ein abstandsgenauer Zusammenbau eines Dachmoduls mit einer Fahrzeugkaroserie bekannt. Aus der DE 102 49 418 B4 ist ein Karosserieelement für ein Fahrzeug bekannt. Aus der EP 1 559 600 A2 ist eine Fahrzeugdachanordnung bekannt. Aus der DE 10 2016 114 988 A1 ist ein Befestigungselement mit schneidenartiger Eindringeinrichtung bekannt. Aus der DE 196 19 087 A1 ist eine Befestigungsvorrichtung bekannt. Aus der DE 43 24 675 A1 ist eine Dachöffnungsvorrichtung mit Windabweiser bekannt.

Die WO 2021/008728 A1 offenbart eine Befestigungsanordnung gemäß dem Oberbegriff des Anspruchs 1.

Die Aufgabe der Erfindung besteht darin, eine Befestigungsanordnung mit einer Fahrzeug-Dachrahmenstruktur und einem Dachmodul bereitzustellen, das im Vergleich zum Stand der Technik mit reduziertem Bauteilgewicht und/oder in einfacher Weise korrosionsbeständig aufgebaut ist.

Die Aufgabe ist durch die Merkmale des Anspruches 1 gelöst. Bevorzugte Weiterbildungen der Erfindung sind in den Unteransprüchen offenbart.

Die Erfindung geht von einer Befestigungsanordnung aus, bei der ein Dachmodul-Träger im Zusammenbauzustand auf einem Klebeflansch der Fahrzeug-Dachrahmenstruktur unter Zwischenlage eines Klebstoffes abgestützt ist und damit in Klebverbindung ist. Zusätzlich ist der Dachmodul-Träger mit dem Klebeflansch der Fahrzeug-Dachrahmenstruktur in einer Schraubverbindung, bei der der Dachmodul-Träger mittels zumindest einer Befestigungsschraube am Klebeflansch der Dachrahmenstruktur festgespannt ist. Zur Vermeidung von Kontaktkorrosion in der Schraubverbindung und/oder zur Reduzierung des Bauteilgewichts (im Vergleich zu einer herkömmlichen Metallschraube) ist die Befestigungsschraube aus Kunststoff gefertigt. Der Kunststoff kann aus thermoplastischem Material, etwa Polyamid, Polyphtalamid oder einem anderen technischen Kunststoff, gefertigt sein. Alternativ dazu kann der Kunststoff aus duroplastischem Material, etwa Epoxid, Polyester, Vinylester oder dergleichen, gefertigt sen. Zur Steigerung der Steifigkeit beziehungsweise Festigkeit, insbesondere zur Bereitstellung einer Befestigungsschraube hoher Festigkeitsklasse, kann ein Faserverbundkunststoff eingesetzt werden, bei dem im Kunststoff Verstärkungsfasern, insbesondere Glasfasern, eingebettet sind. Beispielhaft kann der Anteil der Faserverstärkung bei 50% (Masseprozent) liegen. Eine solche Faserverstärkung führt zu einer besseren Steifigkeit beziehungsweise Festigkeit der Schraube, die mit mindestens 2 bis 3 Nm angezogen sein muss, um das Dachmodul an der Dachrahmenstruktur (insbesondere in der Fahrzeughochrichtung) zu fixieren.

In einer technischen Umsetzung kann der Klebeflansch der Dachrahmenstruktur nach fahrzeuginnen ragen und/oder in einer Horizontalebene ausgerichtet sein. Der Klebeflansch kann im Wesentlichen rahmenartig umlaufend ausgebildet sein. In gleicher Weise kann auch der Dachmodul-Träger als ein im Wesentlichen rahmenartig geschlossener Verstärkungsrahmen ausgebildet sein, der sowohl in Klebverbindung als auch in Schraubverbindung auf dem Klebeflansch abgestützt ist.

In der Schraubverbindung kann die Schraubachse der Befestigungsschraube insbesondere in der Fahrzeughochrichtung ausgerichtet sein. Im Zusammenbauzustand kann die Befestigungsschraube mit ihrem Schraubenschaft durch ein Schraubloch des Klebeflansches sowie durch ein Schraubloch des Dachmodul-Trägers geführt sein und mit einer Schraubenmutter, insbesondere Stanzmutter, verschraubt sein. Auf diese Weise können der Klebeflansch und der Dachmodul-Träger zwischen dem Schraubkopf der Befestigungsschraube und der Schraubenmutter verspannt sein.

In einer konkreten Ausführungsform kann die Dachrahmenstruktur einen seitlichen Dachrahmen-Längsträger aufweisen, der sich in der Fahrzeuglängsrichtung erstreckt. Der Dachrahmen-Längsträger kann aus einem schalenförmigen fahrzeuginneren Blechinnenteil, einem schalenförmigen fahrzeugäußeren Blechaußenteil und einem Außenhaut-Blechteil aufgebaut sein, das das Blechaußenteil überdeckt. Das Blechaußenteil, das Blechinnenteil sowie das Außenhaut-Blechteil können mit ihren fahrzeuginneren Längsflanschen unter Bildung einer Flanschverbindung zusammengefügt sein. Die Flanschverbindung bildet den Klebeflansch, auf dem das Dachmodul abstützbar ist.

Der Dachrahmen-Längsträger ist im Fahrzeug-Rohbau Bestandteil einer Fahrzeug-Seitenstruktur, in die in einem Seitencrashfall eine Crashkraft einleitbar ist. Die Ausbildung der Befestigungsschraube aus Kunststoffmaterial ist im Seitencrashfall aus folgendem Grunde von Vorteil: So weist die Kunststoffschraube im Vergleich zu einer herkömmlichen Metallschraube eine reduzierte Scherfestigkeit auf. Im Seitencrashfall kann daher die Befestigungsschraube als eine Sollbruchstelle wirken, die im Crashverlauf frühzeitig abschert oder bricht. Auf diese Weise kann sich bereits zu einem frühen Zeitpunkt im Crashverlauf das Dachmodul von dem Dachrahmen des Fahrzeugdaches lösen, was sich günstig auf den Crashverlauf auswirkt.

Im Hinblick auf eine einwandfreie Klebverbindung können zwischen dem Klebeflansch und dem Dachmodul-Träger Abstandhalter positioniert sein, die eine vordefinierte Schichtdicke des Klebstoffes gewährleisten. Der Zusammenbau des Dachmoduls mit der Dachrahmenstruktur kann in der nachfolgend beschriebenen Prozessabfolge durchgeführt werden: So kann in einem ersten Prozessschritt das Dachmodul als separate Vormontageeinheit bereitgestellt werden, auf dessen Dachmodul-Träger der Klebstoff appliziert ist, etwa ein 2K-PUR-Scheibenkleber, der im noch nicht ausgehärteten Zustand weich, das heißt nicht formstabil ist. In einem zweiten Prozessschritt wird das Dachmodul in einer vordefinierten Endmontageposition auf dem Klebeflansch positioniert. Anschließend folgt ein dritter Prozessschritt, bei dem das Dachmodul mit dem Klebeflansch des Dachrahmens verschraubt wird. Die Schraubverbindung wirkt während der Aushärtephase des Klebstoffes als eine Lagesicherung des Dachmoduls in der Fahrzeughochrichtung. Nach erfolgter Aushärtung der Klebverbindung ist die Schraubverbindung weitgehend funktionslos, da die Verbindungsfestigkeit zwischen dem Dachmodul und dem Klebeflansch über die ausgehärtete Klebverbindung gewährleistet wird.

Nachfolgend ist ein Ausführungsbeispiel der Erfindung anhand der beigefügten Figuren beschrieben. Es zeigen:
- Fig. 1: ein Fahrzeug in einer Ansicht von oben;
- Fig. 2 und 3: jeweils Teilschnittdarstellungen entlang der Schnittebenen A-A und B-B aus der Fig. 1; und
- Fig. 4: eine Befestigungsanordnung in Explosionsdarstellung.

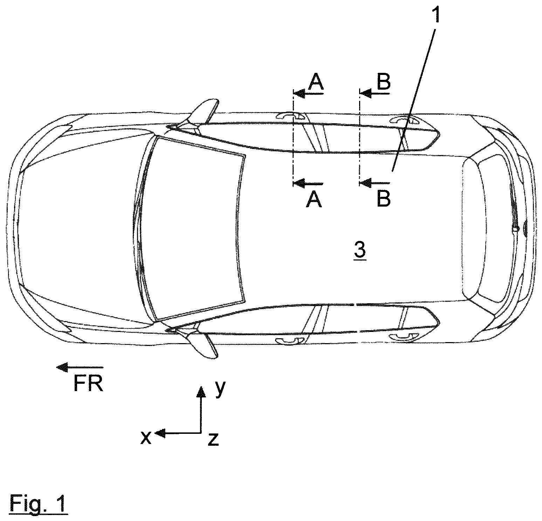

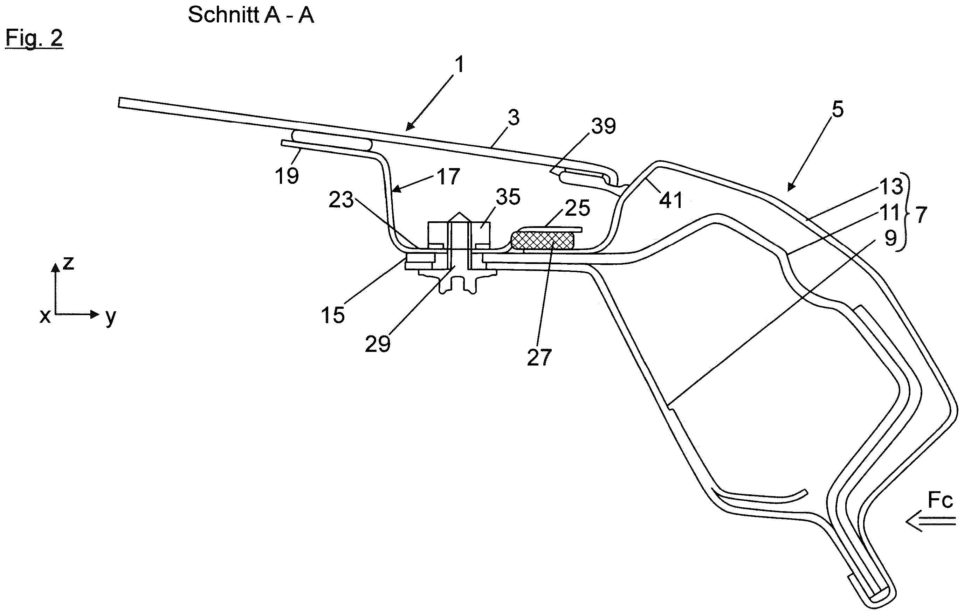

In der Fig. 1 ist ein Kraftfahrzeug gezeigt, auf dessen Dachseite ein Dachmodul 1 mit einem geschlossenflächigen Volldach-Blechteil 3 aus zum Beispiel CFK verbaut ist, das die Fahrzeug-Dachseite komplett überspannt. Das Dachmodul 1 ist auf einer karosserieseitigen Dachrahmenstruktur 5 montiert, von der in den Fig. 2 bis 4 jeweils ein seitlicher Dachrahmen-Längsträger 7 gezeigt ist, der sich in der Fahrzeuglängsrichtung x erstreckt. In den Fig. 2 bis 4 weist der Dachrahmen-Längsträger 7 ein schalenförmiges fahrzeuginneres Blechinnenteil 9, ein schalenförmiges fahrzeugäußeres Blechaußenteil 11 und ein Außenhaut-Blechteil 13 auf, das das Blechaußenteil 11 überdeckt. Das Blechaußenteil 11, das Blechinnenteil 9 sowie das Außenhaut-Blechteil 13 sind an ihren fahrzeuginneren Längsflanschen zu einer Flanschverbindung zusammengefügt. Diese bildet einen Klebeflansch 15, auf dem ein Verstärkungsrahmen 17 des Dachmoduls 1 abgestützt ist.

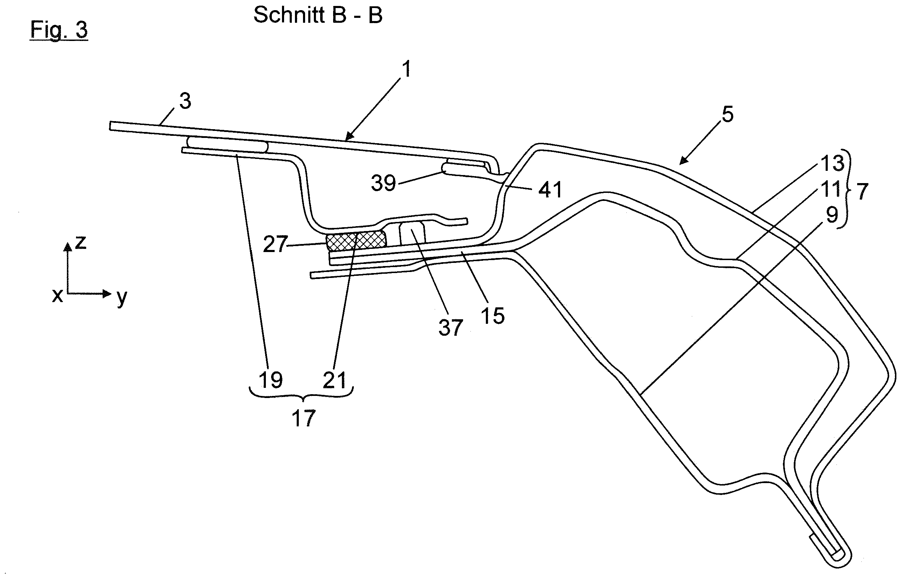

In der Fig. 2 ist der Verstärkungsrahmen 17 im Querschnitt gezeigt, und zwar mit einem fahrzeugoberen Tragschenkel 19, der in Klebverbindung mit dem Volldach-Blechteil 3 ist, und einem fahrzeugunteren Tragschenkel 21 (Figur 3), der mit einem Stützabschnitt 23 in unmittelbarer Anlage auf dem Klebeflansch 15 sitzt. Der Stützabschnitt 23 des Verstärkungsrahmens 17 geht in der Fig. 2 nach fahrzeuginnen an einer Abstufung in einen Klebabschnitt 25 über. Dieser ist vom Klebeflansch 15 um einen Klebspalt beabstandet, der mit Klebstoff 27 gefüllt ist. Zudem ist das Dachmodul 1 über eine Schraubverbindung am Klebeflansch 15 gesichert. Die Schraubverbindung weist eine Befestigungsschraube 29 auf, die mit ihrem Schraubenschaft durch ein Schraubloch 31 des Klebeflansches 15 sowie durch ein Schraubloch 33 des Verstärkungsrahmens 17 geführt ist und mit einer am Verstärkungsrahmen 17 eingestanzten Schraubenmutter 35 verschraubt ist. Auf diese Weise ist der Klebeflansch 15 sowie der Verstärkungsrahmen 17 des Dachmoduls 1 zwischen dem Schraubkopf der Befestigungsschraube 29 und der Schraubenmutter 35 verspannt. Wie aus der Fig. 3 weiter hervorgeht, sind zwischen dem fahrzeugunteren Tragschenkel 21 des Verstärkungsrahmens 17 und dem Klebeflansch 15 Abstandhalter 37 positioniert, von denen in der Fig. 3 einer gezeigt ist. Mit Hilfe der Abstandhalter 37 wird eine vordefinierte Schichtdicke des Klebstoffes 27 gewährleistet.

In den Fig. 2 bis 4 weist das Volldach-Blechteil 3 randseitig ein elastisch nachgiebiges Element (so genannte Nullfugen-Dichtung) 39 auf, das den Blechteilrand des Voll-Blechteils 3 nach fahrzeugaußen geringfügig überragt. Im Zusammenbauzustand (Fig. 2 oder 3) ist das elastisch nachgiebiges Element 39 des Volldach-Blechteils 3 in Anlage mit einer Fügeflanke 41 des Außenhaut-Blechteils 13.

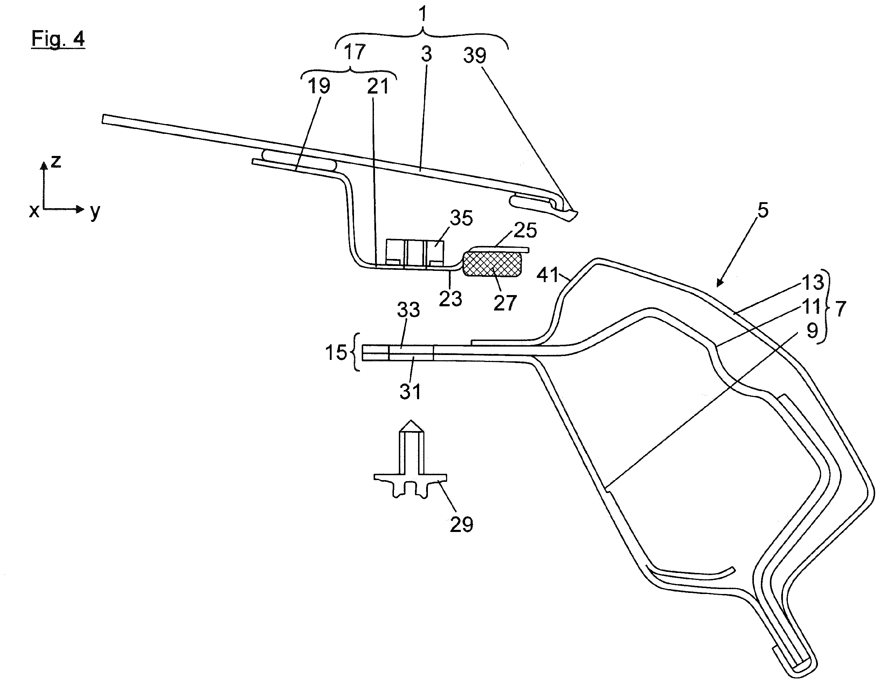

Nachfolgend wird anhand der Fig. 4 eine Prozessabfolge zur Montage des Dachmoduls 1 auf der Dachrahmenstruktur 5 des Fahrzeugs beschrieben: Demnach wird in einem ersten Prozessschritt das Dachmodul 1 als eine separate Vormontageeinheit bereitgestellt, auf dessen Verstärkungsrahmen 17 der Klebstoff 27 appliziert wird. In einem zweiten Prozessschritt wird das Dachmodul 1 auf dem Klebeflansch 15 der Dachrahmenstruktur 5 lagerichtig positioniert. Anschließend folgt ein dritter Prozessschritt, bei dem das Dachmodul 1 mit dem Klebeflansch 15 der Dachrahmenstruktur 5 verschraubt wird. Die Schraubverbindung bewirkt während einer Aushärtephase des Klebstoffes 27 eine Lagesicherung des Dachmoduls 1 in der Fahrzeughochrichtung z. Nach erfolgter Aushärtung ist die Schraubverbindung weitgehend funktionslos, da die Verbindungsfestigkeit zwischen dem Dachmodul 1 und dem Klebeflansch 15 weitgehend von der Klebverbindung gewährleistet wird.

Ein Kern der Erfindung besteht darin, dass die Befestigungsschraube 29 aus Kunststoff gefertigt ist, wodurch eine Kontaktkorrosion in der Schraubverbindung vermeidbar ist und das Bauteilgewicht der Befestigungsanordnung reduzierbar ist. Damit die Befestigungsschraube 29 eine ausreichend hohe Festigkeitsklasse aufweist, wird speziell ein Faserverbundkunststoff verwendet, bei dem kurze Verstärkungsfasern, insbesondere Glasfasern, in eine Kunststoffmatrix eingebettet sind.

Der Dachrahmen-Längsträger 7 ist in der Fahrzeugkarosserie Bestandteil einer Fahrzeug-Seitenstruktur, in die in einem Seitencrashfall eine Crashkraft Fc (Fig. 2) einleitbar ist. Im Hinblick auf einen günstigen Seitencrashverlauf ist die Verwendung von Kunststoff bei der Befestigungsschraube 29 aus folgenden Gründen vorteilhaft: Die aus Kunststoff gefertigte Befestigungsschraube 29 weist im Vergleich zu einer herkömmlichen Metallschraube eine reduzierte Scherfestigkeit auf. Von daher wirkt die Befestigungsschraube 29 im Seitencrashfall als eine Sollbruchstelle, die im Crashverlauf frühzeitig abschert oder bricht. Auf diese Weise kann sich bereits zu einem frühen Zeitpunkt nach erfolgtem Seitencrash das Dachmodul 1 von der Dachrahmenstruktur 5 des Fahrzeugs lösen.

### BEZUGSZEICHENLISTE:

- 1: Dachmodul
- 3: Volldach-Blechteil
- 5: Dachrahmenstruktur
- 7: Dachrahmen-Längsträger
- 9: Blechinnenteil
- 11: Blechaußenteil
- 13: Außenhaut-Blechteil
- 15: Klebeflansch
- 17: Verstärkungsrahmen
- 19: fahrzeugoberer Tragschenkel
- 21: fahrzeugunterer Tragschenkel
- 23: Stützabschnitt
- 25: Klebabschnitt
- 27: Klebstoff
- 29: Befestigungsschraube
- 31, 33: Schraublöcher
- 35: Schraubmutter
- 37: Abstandhalter
- 39: elastisch nachgiebiges Element
- 41: Fügeflanke
- Fc: Crashkraft

## Patentansprüche

1. Befestigungsanordnung mit einer Dachrahmenstruktur (5) eines Fahrzeugs und einem Dachmodul (1), dessen Dachmodul-Träger (17) im Zusammenbauzustand auf einem Klebeflansch (15) der Dachrahmenstruktur (5) unter Zwischenlage eines Klebstoffes (27) in Klebverbindung ist, wobei der Dachmodul-Träger (17) zusätzlich mit dem Klebeflansch (15) der Dachrahmenstruktur (5) in Schraubverbindung ist, bei der der Dachmodul-Träger (17) mittels zumindest einer Befestigungsschraube (29) am Klebeflansch (15) der Dachrahmenstruktur (5) festgespannt ist, **dadurch gekennzeichnet, dass** zur Vermeidung von Kontaktkorrosion und/oder zur Reduzierung des Bauteilgewichts die Befestigungsschraube (29) aus Kunststoff gefertigt ist.

2. Befestigungsanordnung nach Anspruch 1, **dadurch gekennzeichnet, dass** der Kunststoff aus thermoplastischem Material, etwa Polyamid, Polyphtalamid oder einem anderen technischen Kunststoff, gefertigt ist, oder dass der Kunststoff aus duroplastischem Material, etwa Epoxid, Polyester, Vinylester oder dergleichen, gefertigt ist.

3. Befestigungsanordnung nach Anspruch 1 oder 2, **dadurch gekennzeichnet, dass** zur Steigerung der Steifigkeit beziehungsweise Festigkeit, insbesondere zur Bereitstellung einer Befestigungsschraube (29) hoher Festigkeitsklasse, im Kunststoff Verstärkungsfasern, insbesondere Glasfasern, eingebettet sind, und zwar unter Bildung eines Faserverbundkunststoffes.

4. Befestigungsanordnung nach einem der vorhergehenden Ansprüche, **dadurch gekennzeichnet, dass** der Klebeflansch (15) von der Dachrahmenstruktur (5) nach fahrzeuginnen ragt und/oder der Klebeflansch (15) in einer Horizontalebene (xy) ausgerichtet ist, und/oder dass der Klebeflansch (15) im Wesentlichen rahmenartig umlaufend ausgebildet ist, und/oder dass der Dachmodul-Träger (17) als ein im Wesentlichen rahmenartig geschlossener Verstärkungsrahmen ausbildet ist, der in Klebverbindung sowie in Schraubverbindung auf dem Klebeflansch (15) abgestützt ist.

5. Befestigungsanordnung nach einem der vorhergehenden Ansprüche, **dadurch gekennzeichnet, dass** die Befestigungsschraube (29) in der Fahrzeughochrichtung (z) ausgerichtet ist, und/oder dass die Befestigungsschraube (29) mit ihrem Schraubenschaft durch ein Schraubloch (31) des Klebeflansches (15) sowie durch ein Schraubloch (33) des Dachmodul-Trägers (17) geführt ist und mit einer Schraubenmutter (35), insbesondere Stanzmutter, verschraubt ist, so dass der Klebeflansch (15) und der Dachmodul-Träger (17) zwischen dem Schraubkopf der Befestigungsschraube (29) und der Schraubenmutter (35) verspannt ist.

6. Befestigungsanordnung nach einem der vorhergehenden Ansprüche, **dadurch gekennzeichnet, dass** die Dachrahmenstruktur (5) zumindest einen seitlichen Dachrahmen-Längsträger (7) aufweist, der sich in der Fahrzeuglängsrichtung (x) erstreckt, und dass insbesondere der Dachrahmen-Längsträger (7) aus einem schalenförmigen fahrzeuginneren Blechinnenteil (9), einem schalenförmigen fahrzeugäußeren Blechaußenteil (11) und einem Außenhaut-Blechteil (13) aufgebaut ist, das das Blechaußenteil (11) überdeckt, und dass insbesondere das Blechaußenteil (11), das Blechinnenteil (9) und das Außenhaut-Blechteil (13) mit ihren fahrzeuginneren Längsflanschen zu einer Flanschverbindung zusammengefügt sind, und dass insbesondere die Flanschverbindung den Klebeflansch (15) bildet.

7. Befestigungsanordnung nach Anspruch 6, **dadurch gekennzeichnet, dass** der Dachrahmen-Längsträger (7) Bestandteil einer Fahrzeug-Seitenstruktur ist, in die in einem Seitencrashfall eine Crashkraft (F_{c}) einleitbar ist.

8. Befestigungsanordnung nach Anspruch 7, **dadurch gekennzeichnet, dass** die aus Kunststoff gefertigte Befestigungsschraube (29), insbesondere im Vergleich zu einer herkömmlichen Metallschraube, eine reduzierte Scherfestigkeit aufweist, und/oder dass die Befestigungsschraube (29) im Seitencrashfall als eine Sollbruchstelle wirkt, die im Crashverlauf frühzeitig abschert oder bricht, wodurch sich zu einem frühen Zeitpunkt nach dem Seitencrash das Dachmodul (1) von der Dachrahmenstruktur (5) des Fahrzeugs löst.

9. Befestigungsanordnung nach einem der vorhergehenden Ansprüche, **dadurch gekennzeichnet, dass** zwischen dem Klebeflansch (15) und dem Dachmodul-Träger (17) Abstandhalter (37) positioniert sind, die eine vordefinierte Schichtdicke des Klebstoffes (27) gewährleisten.

10. Verfahren zum Zusammenbau einer Befestigungsanordnung nach einem der vorhergehenden Ansprüche, wobei in einer Zusammenbau-Abfolge
in einem ersten Prozessschritt das Dachmodul (1) als separate Vormontageeinheit bereitstellbar ist, auf dessen Dachmodul-Träger (17) der Klebstoff (27) applizierbar ist,
in einem zweiten Prozessschritt das Dachmodul (1) auf dem Klebeflansch (15) positionierbar ist, und
in einem dritten Prozessschritt das Dachmodul (1) mit dem Klebeflansch (15) des Dachrahmens (5) verschraubbar ist, und dass insbesondere die Schraubverbindung während einer Aushärtephase des Klebstoffes (27) eine Positionssicherung des Dachmoduls (1), insbesondere in der Fahrzeughochrichtung (z), bewirkt, und/oder dass insbesondere nach erfolgter Aushärtung die Schraubverbindung weitgehend funktionslos ist und die Verbindungsfestigkeit zwischen dem Dachmodul (1) und dem Klebeflansch (15) weitgehend mittels der Klebverbindung gewährleistet ist.

## Claims

1. Mounting assembly with a roof-frame structure (5) of a vehicle and a roof module (1), the roof-module carrier (17) of which, in the assembled state, is adhesively bonded to an adhesive flange (15) of the roof-frame structure (5) with an interposed adhesive (27), wherein the roof-module carrier (17) is additionally connected to the adhesive flange (15) of the roof-frame structure (5) by a screw connection in which the roof-module carrier (17) is firmly clamped to the adhesive flange (15) of the roof-frame structure (5) by means of at least one fastening screw (29), **characterized in that** to avoid contact corrosion and/or to reduce the component weight, the fastening screw (29) is made from plastic.

2. Mounting assembly according to claim 1, **characterized in that** the plastic is made of thermoplastic material, such as polyamide, polyphthalamide or another engineering plastic, or **in that** the plastic is made of thermosetting material, such as epoxy, polyester, vinyl ester or the like.

3. Mounting assembly according to claim 1 or 2, **characterized in that** to increase the rigidity or strength, in particular to provide a fastening screw (29) of high strength class, reinforcing fibers, in particular glass fibers, are embedded in the plastic, in particular by forming a fiber composite plastic.

4. Mounting assembly according to any one of the preceding claims, **characterized in that** the adhesive flange (15) of the roof-frame structure (5) protrudes inwards towards the vehicle and/or the adhesive flange (15) is aligned in a horizontal plane (xy), and/or **in that** the adhesive flange (15) is substantially formed like an encircling frame, and/or **in that** the roof-module carrier (17) is designed as a substantially frame-like closed reinforcement frame which is supported on the adhesive flange (15) with an adhesive connection and a screw connection.

5. Mounting assembly according to any one of the preceding claims, **characterized in that** the fastening screw (29) is aligned in the vehicle vertical direction (z) and/or **in that** the fastening screw (29) is guided with its screw shank through a screw hole (31) of the adhesive flange (15) and through a screw hole (33) in the roof-module carrier (17) and is screwed to a screw nut (35), in particular a pierce nut, so that the adhesive flange (15) and the roof module carrier (17) are clamped between the screw head of the fastening screw (29) and the screw nut (35).

6. Mounting assembly according to any one of the preceding claims, **characterized in that** the roof-frame structure (5) has at least one lateral roof-frame longitudinal beam (7) which extends in the vehicle longitudinal direction (x), and **in that** in particular the roof-frame longitudinal beam (7) consists of a cup-shaped inner vehicle sheet part (9), a cup-shaped outer vehicle sheet part (11) and an outer skin sheet part (13) which covers the outer sheet part (11), and **in that** in particular the outer sheet part (11), the inner sheet part (9) and the outer skin sheet part (13) are joined together with their longitudinal flanges on the inside of the vehicle to form a flange connection, and **in that** in particular the flange connection forms the adhesive flange (15).

7. Mounting assembly according to claim 6, **characterized in thatthe** roof-frame longitudinal beam (7) is part of a vehicle side structure into which a crash force (F_{c}) can be introduced in the event of a side crash.

8. Mounting assembly according to claim 7, **characterized in that** the fastening screw (29) made of plastic has a reduced shearing strength, in particular compared to a conventional metal screw, and/or **in that** the fastening screw (29) acts as a predetermined breaking point which, in the event of a side crash, shears off or breaks early in the course of the crash, causing the roof module (1) to detach from the roof-frame structure (5) of the vehicle early on after the side crash.

9. Mounting assembly according to any one of the preceding claims, **characterized in that** between the adhesive flange (15) and the roof-module carrier (17), spacers (37) are positioned which ensure a predefined layer thickness of the adhesive (27).

10. Method for assembling a mounting assembly according to any one of the preceding claims, wherein in an assembly sequence
in a first process step, the roof module (1) is provided as a separate pre-assembly unit, on the roof-module carrier (17) of which the adhesive (27) can be applied,
in a second process step, the roof module (1) is positioned on the adhesive flange (15), and
in a third process step, the roof module (1) is screwed to the adhesive flange (15) of the roof-frame (5), and in that in particular the screw connection secures the position of the roof module (1) during a hardening phase of the adhesive (27), in particular in the vehicle vertical direction (z), and/or in that, in particular after hardening has taken place, the screw connection is largely functionless and the connection strength between the roof module (1) and the adhesive flange (15) is substantially ensured by means of the adhesive connection.

## Revendications

1. Agencement de fixation avec une structure de cadre de toit (5) d'un véhicule et un module de toit (1), dont le support de module de toit (17) est en liaison par collage à l'état assemblé sur une bride de collage (15) de la structure de cadre de toit (5) avec interposition d'une colle (27), dans lequel le support de module de toit (17) est en outre en liaison par vis avec la bride de collage (15) de la structure de cadre de toit (5), dans lequel le support de module de toit (17) est serré au moyen d'au moins une vis de fixation (29) sur la bride de collage (15) de la structure de cadre de toit (5), **caractérisé en ce que** la vis de fixation (29) est fabriquée en plastique pour éviter la corrosion par contact et/ou pour réduire le poids du composant.

2. Agencement de fixation selon la revendication 1, **caractérisé en ce que** le plastique est constitué d'un matériau thermoplastique, tel que du polyamide, du polyphtalamide ou un autre plastique technique, ou **en ce que** le plastique est constitué d'un matériau thermodurcissable, tel que de l'époxy, du polyester, de l'ester de vinyle ou similaire.

3. Agencement de fixation selon la revendication 1 ou 2, **caractérisé en ce que,** pour augmenter la rigidité ou la résistance, en particulier pour fournir une vis de fixation (29) de classe de résistance élevée, des fibres de renforcement, en particulier des fibres de verre, sont incorporées dans le plastique, à savoir en formant un plastique composite de fibres.

4. Agencement de fixation selon l'une quelconque des revendications précédentes, **caractérisé en ce que** la bride de collage (15) dépasse de la structure de cadre de toit (5) vers l'intérieur du véhicule et/ou **en ce que** la bride de collage (15) est orientée dans un plan horizontal (xy), et/ou **en ce que** la bride de collage (15) est conçue sensiblement à la manière d'un cadre circonférentiel, et/ou **en ce que** le support de module de toit (17) est conçu sensiblement à la manière d'un cadre en tant que cadre de renforcement fermé, qui est supporté sur la bride de collage (15) en liaison par collage ainsi qu'en liaison par vis.

5. Agencement de fixation selon l'une quelconque des revendications précédentes, **caractérisé en ce que** la vis de fixation (29) est orientée dans la direction verticale (z) du véhicule, et/ou **en ce que** la vis de fixation (29) est guidée avec sa tige de vis à travers un trou de vis (31) de la bride de collage (15) ainsi qu'à travers un trou de vis (33) du support de module de toit (17) et est vissée avec un écrou de vis (35), en particulier un écrou à poinçonner, de sorte que la bride de collage (15) et le support de module de toit (17) soient serrés entre la tête de vis de la vis de fixation (29) et l'écrou de vis (35).

6. Agencement de fixation selon l'une quelconque des revendications précédentes, **caractérisé en ce que** la structure de cadre de toit (5) présente au moins un longeron de cadre de toit latéral (7) qui s'étend dans la direction longitudinale (x) du véhicule, et **en ce que** en particulier le longeron de cadre de toit (7) est constitué d'une partie intérieure de tôle (9) en forme de coque à l'intérieur du véhicule, une partie extérieure de tôle (11) en forme de coque à l'extérieur du véhicule et une partie de tôle de revêtement extérieur (13) qui recouvre la partie extérieure de tôle (11), et **en ce que** en particulier la partie extérieure de tôle (11), la partie intérieure de tôle (9) et la partie de tôle de revêtement extérieure (13) sont assemblées avec leurs brides longitudinales à l'intérieur du véhicule pour former un raccord à bride, et **en ce que** en particulier le raccord à bride forme la bride de collage (15).

7. Agencement de fixation selon la revendication 6, **caractérisé en ce que** le longeron de cadre de toit (7) fait partie d'une structure latérale de véhicule dans laquelle une force de collision (F_{c}) peut être introduite en cas de collision latérale.

8. Agencement de fixation selon la revendication 7, **caractérisé en ce que** la vis de fixation (29) fabriquée en plastique présente une résistance au cisaillement réduite, en particulier par rapport à une vis métallique courante, et/ou **en ce que** la vis de fixation (29) agit, en cas de collision latérale, comme un point de rupture de consigne qui se cisaille ou se rompt prématurément au cours de la collision, moyennant quoi le module de toit (1) se détache de la structure de cadre de toit (5) du véhicule à un moment précoce après la collision latérale.

9. Agencement de fixation selon l'une quelconque des revendications précédentes, **caractérisé en ce que** des entretoises (37) sont positionnées entre la bride de collage (15) et le support de module de toit (17), entretoises qui assurent une épaisseur de couche prédéfinie de la colle (27).

10. Procédé d'assemblage d'un agencement de fixation selon l'une quelconque des revendications précédentes, dans lequel, dans une séquence d'assemblage
dans une première étape de processus, le module de toit (1) peut être fourni en tant qu'unité de prémontage séparée, sur le support de module de toit (17) duquel la colle (27) peut être appliquée,
dans une deuxième étape de processus, le module de toit (1) peut être positionné sur la bride de collage (15), et
dans une troisième étape de processus, le module de toit (1) peut être vissé sur la bride de collage (15) du cadre de toit (5), et en ce que en particulier la liaison par vis provoque, pendant une phase de durcissement de la colle (27), un blocage en position du module de toit (1), en particulier dans la direction verticale (z) du véhicule, et/ou en ce que en particulier après que le durcissement s'est produit, la liaison par vis est en grande partie inopérante et la résistance de liaison entre le module de toit (1) et la bride de collage (15) est en grande partie assurée au moyen de la liaison par collage.
